# EUROPEAN PATENT SPECIFICATION

(11) **EP 2 888 163 B1**
(45) Date of publication and mention of the grant of the patent: **08.11.2017**
(21) Application number: 13750123.5
(22) Date of filing: 12.08.2013
(51) Int. Cl.: B64C 13/50, F16H 48/10

(54) **CONTROL SURFACE ACTUATION ASSEMBLY**
STEUERFLÄCHENBETÄTIGUNGSANORDNUNG
ENSEMBLE D'ACTIONNEMENT DE SURFACE DE COMMANDE

(30) Priority: 22.08.2012 GB 201214952
(43) Date of publication of application: 01.07.2015
(60) Divisional application: 16187065.4
(73) Proprietor: Moog Wolverhampton Limited, West Midlands WV9 5EW (GB)
(72) Inventor: DAVIES, Jonathan, Stafford Staffordshire ST18 9EL (GB)
(74) Representative: Jones, John Bryn
(86) International application number: PCT/GB2013/052144
(87) International publication number: WO 2014/029972

(56) References cited:
- EP-A1- 0 953 505
- WO-A2-2008/112363

## Description

The present invention is concerned with an aircraft control surface actuation assembly. More specifically, the present invention is concerned with an electrically powered actuation assembly for the actuation of primary aircraft control surfaces, in particular ailerons. A control surface actuation assembly is known from WO2008/11236 which is regarded as the closest prior art. aircraft use hydraulically powered control surface actuation assemblies to move the primary control surfaces such as ailerons. Two linear hydraulic servo-actuators per aileron surface are often provided (for example on the Airbus A320 (RTM)). Each linear hydraulic servo-actuator comprises a separate hydraulic ram to move the aileron surface. The motion of each ram is controlled by a valve module comprising a servo-valve. The servo-actuators form separate load paths from the wing structure to the aileron to provide mechanical redundancy should one servo-actuator experience problems.

Each linear hydraulic servo-actuator is powered by an independent hydraulic supply to provide redundancy should one of the supplies experience a problem, e.g. pressure loss. In normal use the hydraulic control surface actuation assembly operates with one active and one standby linear hydraulic servo-actuator. The standby linear hydraulic servo-actuator can take over should the active linear hydraulic servo-actuator not perform as desired- in other words redundancy is provided in such a system in order to achieve operational and safety requirements.

During normal operation, the standby linear hydraulic servo-actuator is placed in a hydraulic bypass mode, to allow it to be back driven more easily. This reduces the burden on the active linear hydraulic servo-actuator, and therefore the size of hydraulic ram cylinder required.

In the extremely unlikely event that both hydraulic supplies to the linear hydraulic servo-actuator suffer operating problems, one or both of the linear hydraulic servo-actuators can be switched into a mode in which they act as dampers to damp free movement of the aileron surface.

Undamped free movement, or "flutter" detrimentally affects the aerodynamic performance of the aircraft in these circumstance, and as such having a damping mode is beneficial.

It will be noted that the known system provides damping functionality via either linear hydraulic servo-actuator, meaning that there is damping redundancy. This is necessary as either of the servo-actuators could suffer a problem, and require the load path from the remaining linear hydraulic servo-actuator (acting as a damper) to the used. In these circumstances, the damping capability is maintained to mitigate the flutter case.

It is increasingly common in the aircraft industry to consider electric actuation. One approach to providing electric actuation is to replace the above described linear hydraulic servo-actuator with rotary electric actuators. Due to their size, low torque, high speed electric motors are desirable. This necessitates the provision of a gearbox within the actuator, the gearbox having a relatively high gear ratio (several hundreds to one) to provide a relatively low speed, high torque output suitable for control surface actuation.

Although simply replacing two linear hydraulic servo-actuator with two electric actuators per control surface would provide all of the aforementioned advantages of redundancy in the electrical power supply, the motors, and the gearboxes, there is a problem with this approach.

As mentioned above with respect to the hydraulic system, the active unit must be able to back drive the standby unit. In the case of the linear hydraulic servo-actuators, it is easy to place the standby servo-actuator into hydraulic bypass to reduce the burden on the active servo-actuator. The problem with the electric system is the gearbox ratio. The armature of the standby motor when directly back-driven presents little resistance. However, because the active motor has to drive the standby motor interia reflected through a high gear ratio, the power requirement to overcome the inertia of the standby motor armature is now substantial.

It should be noted that the same magnified inertia of the standby motor would be advantageous in terms of damping- should there be a problem with electrical supplies to both motors, they can act as inertial dampers, thus avoiding panel flutter.

The problem is that because there is no equivalent to the bypass mode of the linear hydraulic servo-actuator, both electric motors have to be oversized in order to back drive the inertia of the other during normal use, which adds weight and cost to the system.

Such bypass functionality could conceivably be implemented by mechanically disengaging the standby electric actuator, however such a system would add complexity, unreliability and cost to the system.

It is desirable to reduce the cost and weight of the control surface actuation assembly without reducing the reliability of such a system.

Planetary gearboxes are suitable for the above mentioned electric actuator, due to their potentially high gear ratios and compact size. The necessary gear ratio can be achieved by means of two planetary gearbox stages. In the first stage, an input sun gear drives a series of planet gears on a planet carrier, which in turn drive the sun gear of a second stage. The second stage comprises a planetary arrangement with spreader rings to position the multiple planets (instead of a planet carrier). The planetary arrangement is configured to drive an output ring gear.

One problem with such gearboxes is the measurement of position or velocity at the output ring gear. Ring gears are of a large radius, and positioning a resolver to be driven by the ring gear causes design and packaging problems because of the ring gear radius.

The planetary gearbox output would have output arm connected to the ring gear, and extending radially therefrom. For the range of movement required by the actuator, this can be problematic, as a large circumferential slot has to be provided in the gearbox housing to allow the arm to move. Such a slot is usually provided at a split line separating two parts of the housing, for ease of assembly. This is a problem because the larger the slot, the lower the stiffness of the gearbox housing to which various gears (such as the planet gears) are earthed. The housing typically has to endure large forces both from the gear arrangement and from external loading, and therefore providing features which allow the housing to deform should be avoided..

It is an aim of the present invention to overcome or at least mitigate the above mentioned problems by providing a control surface assembly according to claim 1 and a method of testing a damping assembly according to claim 10. According to a first aspect of the invention, there is provided a control surface assembly comprising: an aircraft structural component, a control surface movably mounted to the aircraft structural component, an actuator comprising a first electric motor arranged to drive the control surface relative to the aircraft wing component via a first load path therebetween, and, a damping assembly arranged to damp relative motion between the control surface and the aircraft wing component via a second load path between the aircraft wing component to the control surface, the second load path being separate from the first load path.

The present invention envisages that only one actuator is provided as a load path between the wing and aileron. Normally, this would be unacceptable because any problem with the actuator would result in the control surface entering the flutter mode. The present invention provides a dedicated, separate damper to account for this. A single damper is less complex and lighter than a further actuator assembly, and therefore reduces cost and complexity whilst providing the required damping function to avoid the flutter condition should there be a problem with the first actuator. Preferably, the actuator assembly comprises a second electric motor configured to drive the control surface relative to the aircraft wing component. This provides motor redundancy. The two motors operate in an active / standby mode.

Also, by providing two electric motors driving the same actuator, they can both be connected to a common input shaft to the gearbox. Therefore the problem of the active unit having to overcome the amplified inertia of the armature of the standby unit is avoided. The active motor only has to overcome the ungeared inertia of the standby motor armature.

Preferably, the first and second motors are driven by separate electrical power supplies, for electrical supply redundancy.

Preferably, the actuator comprises a gearbox having an input arranged to be driven by at least one of the first and second motors, and an output. This allows a small motor having high speed, low torque output to be used for the low speed, high torque requirement of aileron actuation. Preferably, both the first and second motors are arranged to selectively alternately drive the gearbox input. More preferably the motor armatures are mounted on a common shaft.

Preferably, the damping assembly is switchable between a first mode and a second mode, in which the damping effect of the assembly is lower in the first mode than in the second mode. Advantageously, the provision of a switchable damper reduces the force requirement on the active motor, because it can be kept in the first mode unless required to damp control surface flutter.

The damping assembly may be automatically switched between the first mode and the second mode dependent upon an operating condition of the actuator assembly. A control system may be provided, configured to place the damping assembly in the first mode such that the damping effect is negligible during normal operation. Should a malfunction occur, such as a failure of the actuator, breaking the structural link from the motors to the aileron, then the damper will be switched to the second mode.

It is envisaged that a flutter detector could also be provided, for example sensing the motion of the aileron (for example excessive speed, or unusual motion). Should the detector detect motion indicative of flutter, the damping assembly will be placed into the second mode.

The damping assembly may comprise a hydraulic damper. The hydraulic damper may comprise a hydraulic cylinder having a mechanically controlled orifice to control the damping coefficient. As such the hydraulic damper would have a linear output. Such a damper would not be as large as an actuator, and would not require the same level of power to backdrive it during normal use because it does not need to be sized to actuate the control surface.

Alternatively the damping assembly may comprise an electric damper such as a resistively loaded permanent magnet generator. Such dampers comprise a permanent magnet rotor within a wound stator. Movement of the rotor creates currents in the stator which are dissipated by an appropriate resistor. The damper may comprise a gearbox. Because the only function of the damper is to absorb energy, neither the damper nor the gearbox is as large as a full size standby actuator.

According to a second aspect of the invention there is provided a method of testing a damping assembly on an aircraft wing comprising the steps of:
providing a control surface assembly according to the first aspect;
powering the electric motor;
verifying the function of the damping assembly using the electrical power drawn by the motor.

Advantageously, the motor can be used in this manner to provide a pre-flight check of the damping assembly. An increase in motor current (for example above a predetermined level) indicates that the damper is providing proper resistance to movement.

The method may comprise the steps of:
powering the electric motor with the damper in the first mode to obtain a first power draw,
switching the damper into the second mode,
powering the electric motor with the damper in the second mode to obtain a second power draw, and,
verifying the function of the damper by comparing the first and second power draws.

In this case, the test with the damper activated is compared to a test with the damper deactivated. This tests the switching functionality of the damper, and it performance in both modes as well as its absolute damping properties.

The difference in resistance to movement is best demonstrated by keeping the speed of the output the same. Should the power draws differ the damper is clearly switching as intended.

According to a third aspect of the invention, there is provided an aircraft control surface actuator comprising a planetary gearbox assembly having an input sun gear, an intermediate processing planet gear driven by the sun gear and, an output ring gear driven by the intermediate processing planet gear, and a transducer having a rotary input, in which the rotary input is driven by procession of the planet gear via an ungeared connection.

Advantageously, providing the position of the transducer having a take off from the planet gear means that it can lie close to the central axis of the planetary gear arrangement. This is advantageous as it overcomes the problems with attempting to engage the resolver with the ring gear. The planet gears are positioned radially inwardly of the ring gear, and are accessible. For example, an arm mounted for rotation about the centre of the processing planet gears can be used as an input to the rotary transducer. A suitable calculation can be made in order to convert the position / velocity of the planet carrier to that of the output ring gear (as the gear ratio is known).

Preferably, the rotary input of the position transducer is concentric with an axis of procession of the planet gear. More preferably, the position transducer is positioned at least partially within a volume defined by the procession of the planetary gear. The rotary input of the position transducer may engage with a drive formation of a drive arm oriented radially with respect to the procession of the planetary gear.

Preferably the drive arm is engaged with the planet gear to permit relative radial motion but not relative circumferential motion. Advantageously, the planet gears are thereby free to move radially, thus reducing radial forces on the arm and the transducer. A radial slot may be provided in the arm, engaged by a projection from the planet gear to achieve this.

More than one drive arm may be provided to a plurality of planet gears.

Advantageously, by allowing the position resolver to engage with the planet gear set, it can be inserted within the gearbox arrangement, and even within a recess within the volume defined by the procession of the planetary set. This makes for a much more compact arrangement and also acts to protect the position resolver from external forces and contaminants.

An aircraft control surface assembly and actuator according to the present invention will now be described with reference to the following drawings:-
FIGURE 1 is a schematic plan view of part of an aircraft wing comprising a prior art hydraulic primary control surface actuation assembly;
FIGURE 2 is a plan view of part of an aircraft wing comprising an electrically powered primary control surface actuation assembly;
FIGURE 3 shows a plan view of part of an aircraft wing comprising an electrically powered primary control surface actuation assembly according to the present invention;
FIGURE 4a is a schematic view of a first control system for actuation of the assembly of Figure 3;
FIGURE 4b is a schematic view of a second, alternative, control system for actuation of the assembly of Figure 3;
FIGURE 5 is a schematic of the gearbox arrangement used in the assembly according to Figure 3;
FIGURE 6a is a side section view of the actuator used in the assembly of Figure 3;
FIGURE 6b is a detail view of area B Figure 6a; and
FIGURE 7 is an end view of the actuator of Figure 6a.

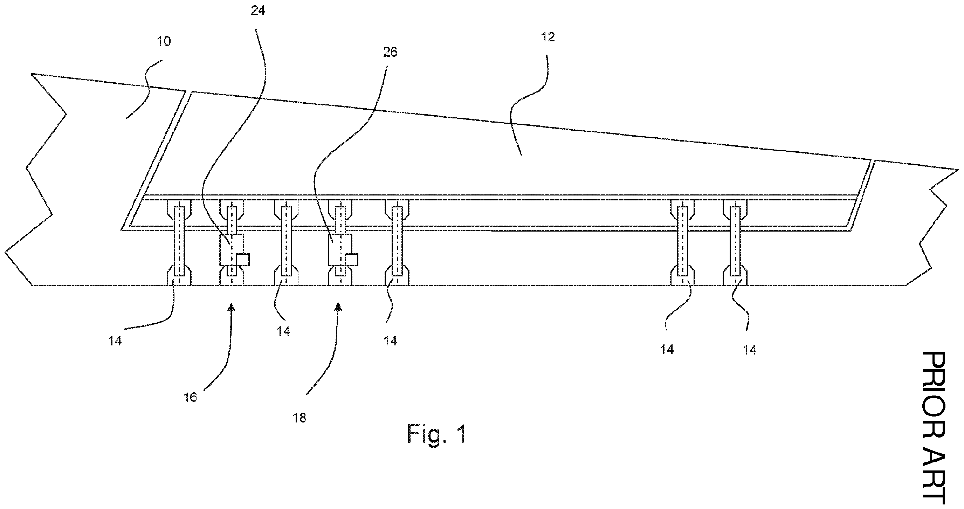

Turning to Figure 1, a part of an aircraft wing 10 is shown to which an aileron panel 12 is movably mounted. The aileron panel 12 is attached to the wing 10 via five mechanical link assemblies 14, being spaced apart and configured to allow articulation of the aileron 12 through a predetermined range of motion, to control the aerodynamic properties of the wing in flight.

A first hydraulic servo-actuator 16 and a second hydraulic servo-actuator 18 are provided and are configured to move the aileron panel 12 relative to the wing 10. Each servo-actuator 16, 18 is powered by a respective hydraulic ram 24, 26, each of which is fed by a separate and independent hydraulic supply (not shown).

In use, the hydraulic servo-actuators 16, 18 are in an active / standby control mode. In other words, the first hydraulic servo-actuator 16 powers the aileron panel 12 for movement in response to commands from the flight control computer. During such actuation, the second hydraulic servo-actuator 18 is placed in standby mode whereby the hydraulic ram 26 is in a bypass mode to provide as little resistance to panel movement as possible. Therefore the first ram 24 does not have to provide significant additional power to back drive the second ram 26.

Should there be a problem with (i) the hydraulic supply powering the ram 24, (ii) the ram 24 itself or (iii) the mechanical connection from the output of the ram 24 to the panel 12, then the standby hydraulic servo-actuator 18 can be used instead.

Should a problem occur with both of the hydraulic servo-actuators 16, 18, then damping of the aileron panel 12 relative to the wing 10 is provided by the inherent resistance of the rams 24, 26, through their respective mechanical attachments to the panel 12. This avoids uncontrolled flutter of the aileron panel 12. Such damping will also occur if the mechanical attachment of one of the hydraulic servo-actuators 16, 18 can no longer transfer load to and from the panel 12.

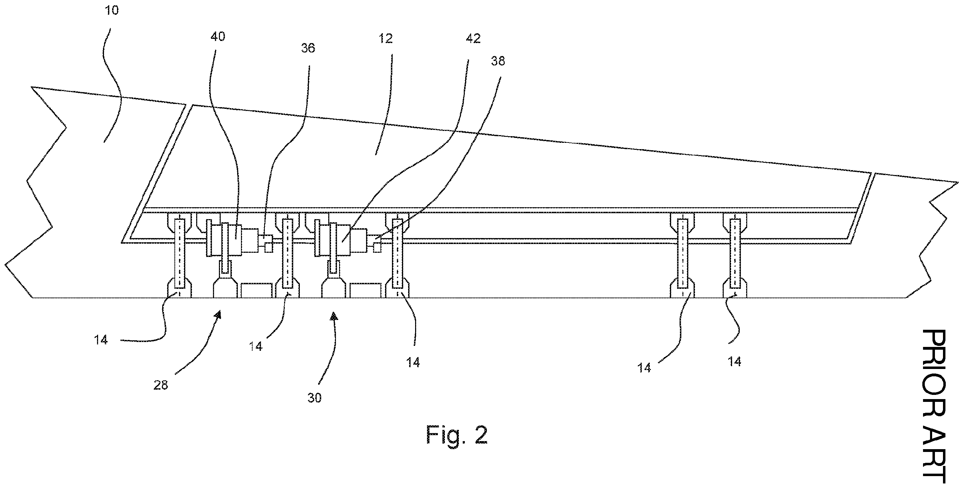

Turning to Figure 2, a conversion from a hydraulic to an electrical system is shown.

The wing 10 and aileron panel 12 are joined by five mechanical link assemblies 14, per Figure 1.

A first rotary electric actuator 28 and a second rotary electric actuator 30 are provided. Each actuator 28, 30 comprises a first and second electric motor 36, 38 respectively. Each motor is driven by a separate electric power supply (not shown). Each actuator 28, 30 comprises a respective reduction gearbox 40, 42 which converts the high speed, low torque output of the electric motors 36, 38 to a low speed, high torque output suitable for moving the aileron panel 12 with respect to the wing 10.

Like the system of Figure 1, the actuators 28, 30 operate in an active / standby mode. The first actuator 28 normally drives the aileron 12 with the second actuator assembly 30 in standby.

Redundancy is provided with respect to (i) the electrical supply, (ii) the motors themselves and (iii) the actuators.

The system of Figure 2 suffers from the inherent problems discussed in the introduction.

The system of Figure 2 has inherent inertial damping properties due to the inertial damping of the motors through their respective gearboxes. If no drive is available, for example through an interruption in both electrical supplies (assuming both actuators were functioning) flutter would not result because the inertia of the motor armatures through the respective gearboxes damps motion of the panel 12. It will also be noted that damping redundancy is also provided by the two assemblies 28, 30.

A problem with the arrangement of Figure 2 is that under normal use the first actuator 28 needs to back drive the second actuator 30. Although it is only the inertia of the armature of the armature of the motor 38 that needs to be overcome, this inertia is multiplied many times by the gearbox 42. This puts a significant burden on the active motor 36 and requires it to be significantly oversized for the application.

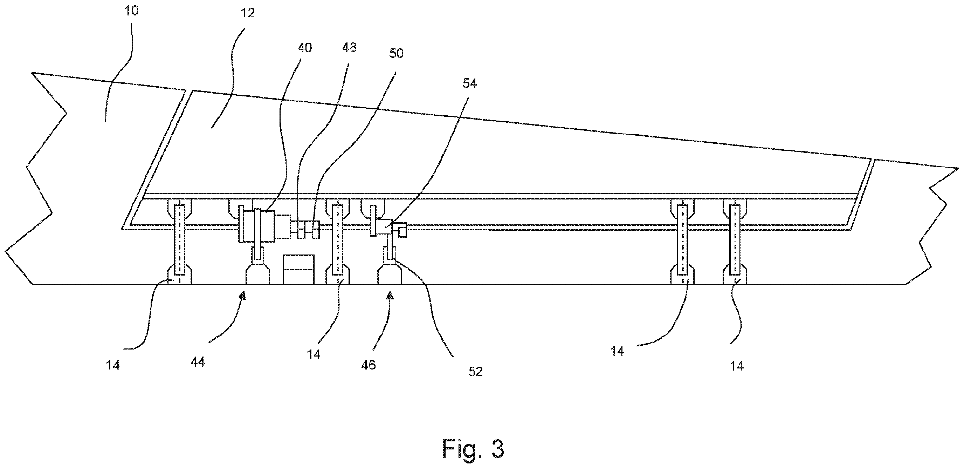

Figure 3 shows an assembly according to the present invention. The aileron 12 is connected to the wing 10 via four mechanical link assemblies 14. In addition, there is provided an rotary electric actuator 44 and a damping assembly 46, each providing individual and discrete load paths from the wing 10 to the aileron 12.

The actuator 44 is substantially similar to the actuator assembly 28 as shown in Figure 2, with the exception that a first electric motor 48 and a second electric motor 50 are provided in place of the single motor 36. Both motor armatures drive a common input shaft to the gearbox 40 of the actuator 44. As with the system of Figure 2, both motors 48, 50 are independently operable and powered by independent electrical supplies (not shown). Therefore electrical supply redundancy and motor redundancy are provided.

It will be noted that the motors 48, 50 are operated in an active / standby mode. In this case, if either motor needs to back drive the other, it can do so easily because the inertia is not amplified by a gearbox.

A dedicated damping assembly 46 is also provided, comprising a mechanical link 52 which is arranged to articulate with movement of the aileron 12 relative to the wing 10, and a dedicated damper 54 which is capable of damping motion between the wing 10 and the aileron 12 via movement of the link 52.

The damper 54 can be switched between a first mode, where its damping effect is negligible, and a second mode where its damping effect is significant. Therefore during normal operation of the actuator assembly 44, the movement of the aileron 12 is not significantly damped by the damper 54 (because it is in the first mode). Should a problem occur with the actuator 44, the damper 54 switches to the second mode to damp the aileron and reduce flutter of the aileron 12. Therefore during normal operation the actuator assembly 44 does not need to expend energy driving the damper 54.

The flight control computer (FCC) is used to switch the damper 54 between the first and second modes. The FCC can detect, for example, that control signals to both motors 48, 50 are having no effect on movement of the aileron 12 (because the FCC monitors aileron panel movement). This would be indicative of a malfunction.

A manual override is also provided so that the pilot can switch the damper 54 into the second mode. This is useful for a manual pre-flight check, in which the damper 54 can be placed in the second mode, and the aileron actuated by the motor 48 or motor 50. An increase in power drawn by the motor compared to having the damper 54 in the first mode indicates that the damper and control system is working satisfactorily. Under these circumstances, the panel 12 would be moved at the same speed in both tests. The current required by the driven motor would increase as the damper is switched into the second mode.

The FCC may be configured to carry out such a check after a predetermined number of flights since the last check. The intention is to avoid dormant failure.

The actuator 44 provides motor redundancy (because there are two motors) and electrical supply redundancy (because the motors are powered by independent supplies). The actuator 44 can also provide damping assuming that a mechanical link remains between the actuator and the panel 12 (due to the fact that the panel has to beackdrive the inertia of the motor armatures through the gearbox). In the event that the mechanical link between the actuator 44 and the panel 12 is broken, such that the actuator 44 can no longer provide damping, the damping assembly 46 can take over and mitigate the flutter case.

It will be noted that the damping assembly 46 is much smaller and less complex than the second actuator 30 of Figure 2, and in the embodiment of Figure 3 only a single gearbox 40 is required. Therefore cost and complexity is reduced.

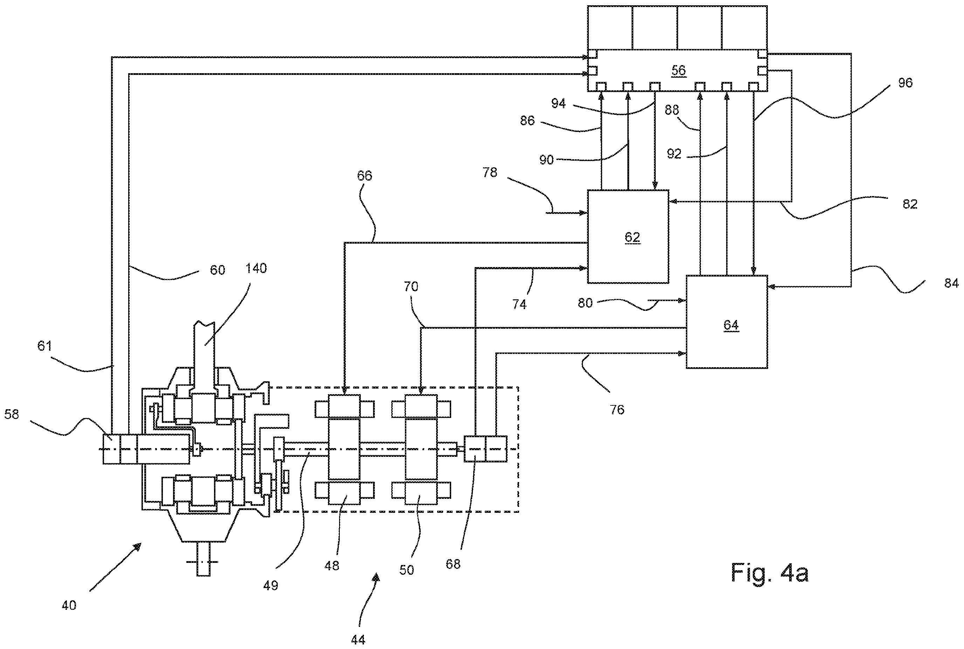

Turning to Figure 4a, a control system schematic for the actuator assembly 44 is shown. A flight control computer (FCC) 56 is configured to control movement of the aileron 12 in response to commands by the pilot or autopilot.

The actuator 44 comprises the motors 48, 50 mounted on a common input shaft 49 of the gearbox 40. A duplex position resolver 58 which has two output data connections 60, 61 into the flight control computer 56 is provided. As will be described below, the position resolver 58 is driven by a planet gear of the gearbox 40. The flight control computer 56 can thereby monitor the position of the aileron 12 relative to the wing 10. This is known as remote loop closure- i.e. the FCC is provided with feedback concerning the position of the aileron and can use this data to accurately control the aileron position as part of a closed-loop control system.

Two motor drive control units 62, 64 are provided. The motor drive control unit 62 is configured to receive power high voltage power (typically +/-270 Volts) from a power supply line 78 and provide power via a power output line 66 to the first electric motor 48. The motor drive control unit 64 is configured to receive power high voltage power (270 Volts) from a power supply line 80 and provide power via a power output line 70 to the second electric motor 50.

A duplex velocity resolver 68 is provided at the end of the shaft 49, providing a velocity signal representative of the speed of the motor armatures. The duplex velocity resolver 68, 72 provides data to the motor drive control units 62, 64 via data lines 74, 76 respectively.

It will be noted that the high voltage system is limited to the motor drive control unit motor circuit. Each of the motor drive control units 62, 64 is enabled via low voltage control lines 82, 84 respectively received from the flight control computer 56.

The flight control computer 56 communicates directly with the motor drive control units 62, 64 using three data lines. The status data line 86, 88 for the first and second motor drive units 62, 64 respectively, provide diagnostic information to the flight control computer 56. The velocity data lines 90, 92 provide velocity information for each of the motors 48, 50 to the flight control computer 56, as gathered by the duplex transducer 68. Finally, two command lines 94, 96 provide command data from the flight control computer 56 to each of the motor drive units 62, 64 respectively. Each control line comprises a demand for panel movement. The FCC monitors the resulting movement via the duplex transducer 58.

The above described system can be configured for remote or local loop closure. In the above example, the outer position loop is closed by the flight control computer via the data line 60. The velocity loop is closed by the motor drive unit as provided by the input lines 74, 76, and the power lines 66, 70 respectively.

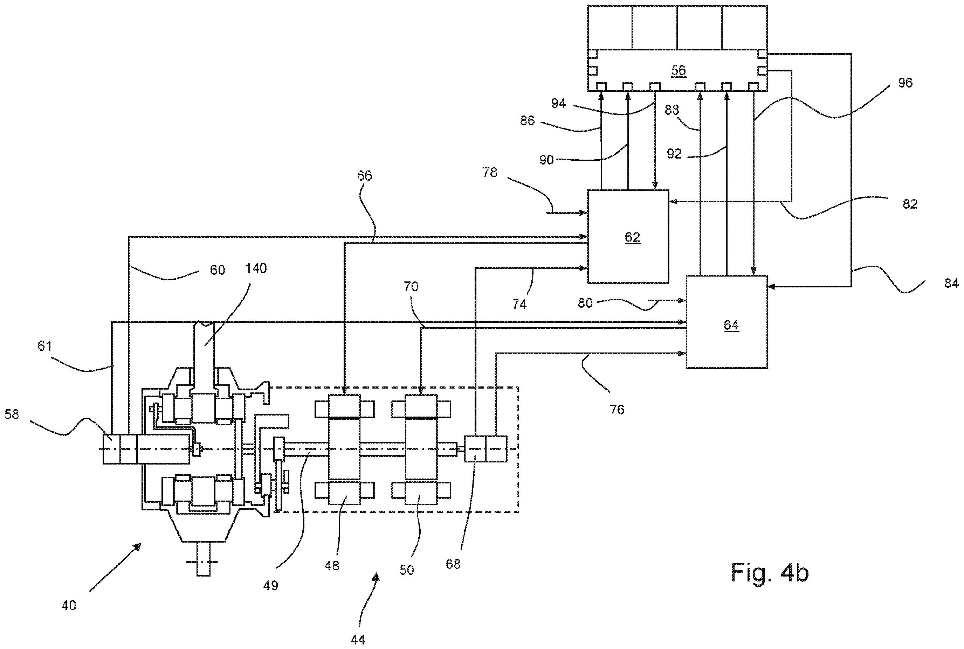

Turning to Figure 4b, remote loop closure is provided in which the position resolver reports to the MDUs (which are integral with the actuator 44) not the FCC. Therefore the FCC simply sends a demand signal via lines 94, 96, and the MDUs carry it out via local loop closure. The FCC may see an error signal should there be a problem with the MDUs or the actuator 44, but it otherwise transmits panel position demand signals without a feedback signal (the feeback loop and position control is carried out by the MDUs). The MDUs may be incorporated into the actuator to provide a "smart" actuator.

In both examples, two MDUs are provided for redundancy.

It is envisaged that both the MDUs 62, 64 and the motors 48, 50 could be combined into single "fault tolerant" MDU and motor units. The MDUs may be combined as long as the reliability of the combined unit has the same functionality as two units (i.e. redundancy). This may be achieved, for example, by using redundant circuits within the MDU.

Similarly, motors 48, 50 may be combined. For example, a combined motor may be provided as long as it has the equivalent or greater reliability than two motors. This may be achieved by splitting the motor coils into several different independent sub-coils.

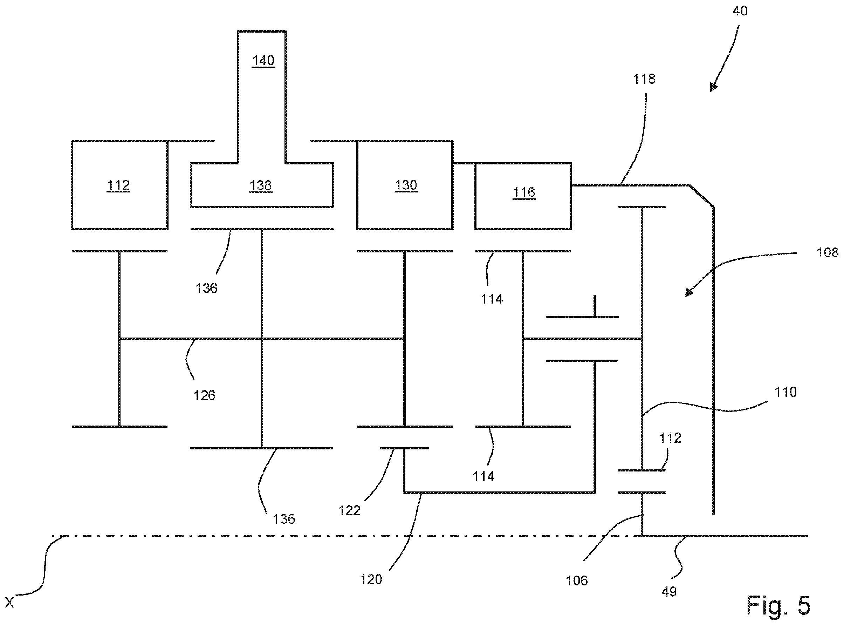

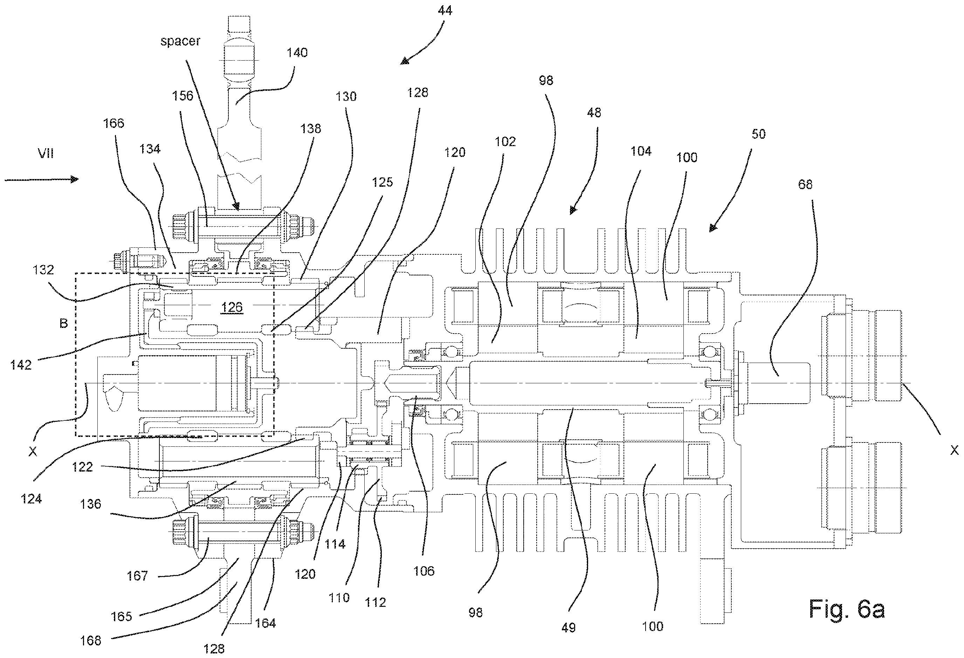

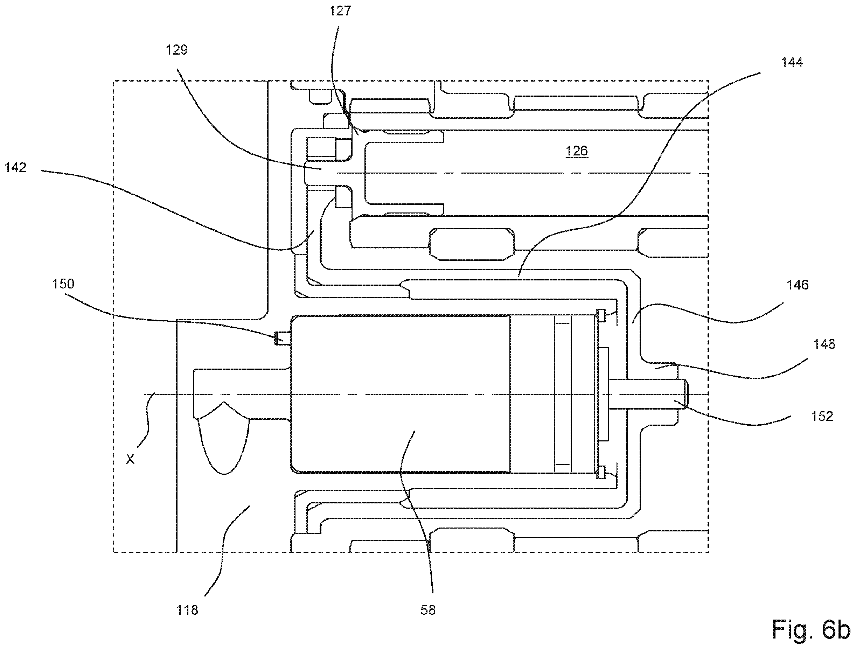

Turning to Figures 5, 6a and 6b, the actuator 44 (an in particular the gearbox 40) is shown in more detail. Figure 5 is a schematic view of the gearbox 40, whereas Figure 6a is a cross-section through a part of the actuator assembly 44.

Turning to Figure 6a, each of the motors 48, 50 comprises a series of motor windings 98, 100 respectively. Within each of the sets of windings there is provided a respective motor armature 102, 104. It will be understood that each of the motors 48, 50 is powered by a separate electric circuit.

Each of the motors 48, 50 is arranged to drive the common shaft 49. During normal operation, only one motor will drive (in accordance with the active / standby mode of operation). At a first end of the shaft 49 there is provided the duplex velocity resolver 68 which is arranged to determine the rotational speed of the shaft 49.

Referring to Figures 5 and 6a simultaneously, at the opposite end of the shaft 49 there is provided a spur gear 106, for transferring drive from the shaft 49. The shaft 49 and therefore the spur gear 106 are arranged to rotate about a central axis X of the gearbox 40. The spur gear 106 acts an input sun gear of a two-stage planetary gearbox, as will be described below.

The spur (input sun) gear 106 is engaged with, and arranged to drive a compound planetary input gear 108. The compound planetary input gear 108 comprises three individual planets 110. Each individual, unitary planet 110 comprises an input gear 112 and an output gear 114. The output gear 114 is arranged to engage with a static set of gear teeth 116 on a gearbox housing 118. The compound planetary input gear 108 is therefore grounded on the housing 118. As such, each of the planets 110 of the compound planetary input gear 108 processes around the central axis X on a first planet carrier 120.

The planet carrier 120 has an output gear 122 about the axis X, forming a sun gear. The output gear 122 meshes with a compound planetary ouput gear 124 comprising eight individual planets 126. The a compound planetary ouput gear 124 does not have a planet carrier, rather a pair of spreader rings 124, 125 being axially offset and providing a reaction to radial inward motion of the planets 126 ( spreader rings not shown in Figure 5).

Each of the planets 126 comprises a first gear 126 which engages with both the sun gear (i.e., the output gear 122 of the planet carrier 120) and also with a static set of teeth 130 on the housing 118. At the opposite axial end of each of the planets 126, there is provided a further second set of gear teeth 132 which mesh with a further static set 134 on the housing 118. As such, each of the planets is grounded to the housing 118 at two spaced positions.

Between the spaced first and second sets of teeth 128, 132, there is provided an output tooth set 136 which meshes with a ring gear 138 providing an output to the actuation arm 140 which is configured to move the aileron panel 12.

Turning to Figure 6b, a resolver drive arm 142 is arranged to rotate about the axis X. Concentric with the axis X, the resolver drive arm 142 defines a cylindrical recess 144 having an end wall 146. The recess 144 extends through the centre point of the circular locus of the procession of the centres of the planet gears 126. The recess 144 overlaps with the planet gears 126 such that they are coplanar along at least part of their axial length. The end wall 146 comprises a drive formation 148 at its axial centre, in the form of a bore with a flat (other formations, such as splines are envisaged).

One of the planets (labelled 126 in Figure 6b) comprises an insert 127 having a pip 129 protruding axially therefrom. The pip 129 engages the end of the resolver drive arm 142 such that the resolver drive arm 142 rotates with the planet 126. The pip engages with the resolver drive arm 142 such that the planet 126 can move radially relative to the resolver drive arm 142, but not circumferentially. This is achieved by mating the pip 129 with a radial slot on the resolver drive arm 142. This eliminates any radial loads on the resolver drive arm 142 of the transducer 58.

The duplex position transducer 58 is housed within the recess 144 and an input shaft 152 of the position transducer 58 is engaged with the drive formation 148 on the resolver drive arm 142. The position resolver 58 is statically mounted within the housing 118 so that it cannot rotate, using an offset pin 150, therefore the input shaft is driven to determine the position of the resolver drive arm142 (and therefore the planet 126).

It will be noted that because the recess 144 is nested within the planet gears 126, the resolver 58 do not project far from the housing 118, forming a compact arrangement.

By using an appropriate calculation, the position of the output arm 140 can easily be determined. Because the gear ratio between the planets 126, and therefore the resolver drive arm 142 and the ring gear 138 is known, the position of the output arm 140 can be determined from the output of the duplex resolver 58.

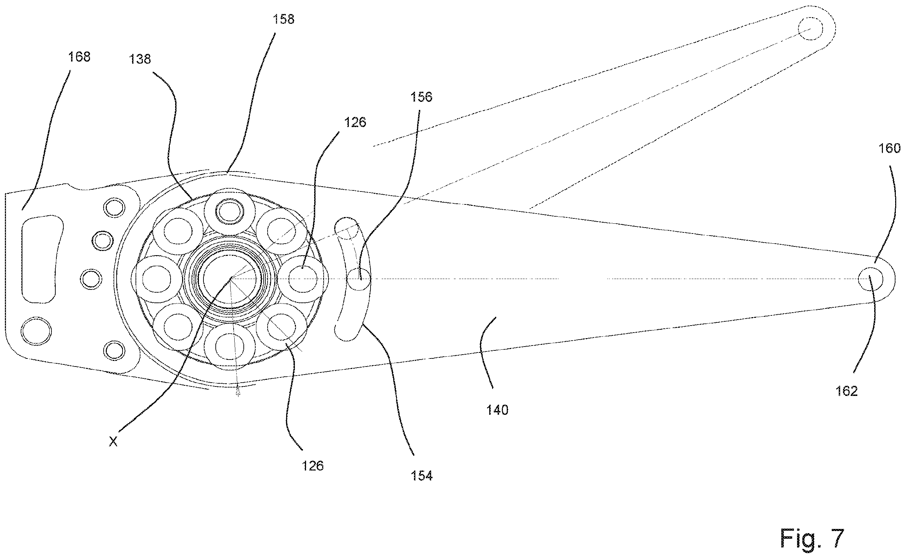

Turning to Figure 7, a view in direction VII in Figure 6a is shown. The arm 140 can clearly be seen in two positions of rotation about the axis X. The arm 140 defines the ring gear 138 at a first end 158. Each of the planet gear assemblies 126 of the output planet cluster 124 can also be seen. The arm 140 tapers from the first end 158 to a smaller second end 160 where a connection point 162 is established for driving connection to the rest of the actuator 44.

It will be noted that the arm 140 comprises a slot 154 outside the radius of the ring gear 138, the slot 154 being arcuate in nature.

Turning back to Figure 6a, the housing 118 has a first part 164 in which most of the gearbox 40 is contained. A second part 166 of the housing is bolted to the first part 164 via bolts 167. An intermediate spacer part 165 is provided between the parts 164, 166. The parts 164, 165, 166 together define a circle segment (i.e. part circumferential) slot to allow rotation of the arm 140 in use. A bolt 156 joining the parts 164, 166 passes through the arcuate slot 154. This is advantageous as the bolt 156 passing through the slot 154 in the arm 140 provides additional strength to the join between the parts of the hosing 164, 166. Further, the ends of the slot 154 provide a limit stop for the arm 140 such that its motion about the axis X is limited.

An attachment point 168 is provided in the intermediate spacer part 165 and is positioned substantially diametrically opposite the arm 140 in its centre position.

## Claims

1. A control surface assembly comprising:
an aircraft structural component (10),
a control surface (12) movably mounted to the aircraft structural component (10),
an actuator (44) comprising a first electric motor (48) arranged to drive the control surface (12) relative to the aircraft wing component (10) via a first load path therebetween, and,
a damping assembly (46) arranged to damp relative motion between the control surface (12) and the aircraft wing component (10) via a second load path between the aircraft wing component (10) to the control surface (12), **characterised in that** the second load path is separate from the first load path.

2. A control surface assembly according to claim 1 in which the actuator (44) comprises a second electric motor (50) arranged to drive the control surface (12) relative to the aircraft wing component (10).

3. A control surface assembly according to claim 2 in which the actuator comprises a gearbox (40) having:
an input arranged to be driven by at least one of the first and second motors (48,50), and,
an output configured to drive the control surface (12).

4. A control surface assembly according to claim 3 in which both the first and second motors (48,50) are arranged to selectively (i) alternately and (ii) simultaneously drive the gearbox input.

5. A control surface assembly according to any preceding claim, in which the damping assembly (46) is switchable between a first mode and a second mode, in which the damping effect of the assembly (46) is lower in the first mode than in the second mode.

6. A control surface assembly according to claim 5 in which in the first mode the damping effect is negligible.

7. A control surface assembly according to claim 5 or 6, in which the damping assembly (46) is automatically switched between the first mode and the second mode dependent upon an operating condition of the actuator (44).

8. A control surface assembly according to claim 7 in which the damper (54) is an electromagnetic damper.

9. A control surface assembly according to claim 7 in which the damper (54) is a hydraulic damper.

10. A method of testing a damping assembly (46) on an aircraft wing (10) comprising the steps of:
providing a control surface assembly according to any preceding claim;
powering the electric motor (48);
verifying the function of the damping assembly (46) using the electrical power drawn by the motor (48).

11. A method of testing a damping assembly (46) on an aircraft wing (10) according to claim 10 in which the control surface assembly is according to claim 5 or any claims dependent thereon, comprising the steps of:
powering the electric motor (48) with the damper (54) in the first mode to obtain a first power draw,
switching the damper (54) into the second mode,
powering the electric motor (48) with the damper (54) in the second mode to obtain a second power draw, and,
verifying the function of the damper (54) by comparing the first and second power draws.

12. A method of testing a damping assembly (46) on an aircraft wing (10) according to claim 11 in which both steps of powering comprise the step of powering the electric motor (48) to achieve the same output speed.

13. A control surface assembly according to claim 3 wherein the actuator is an aircraft control surface actuator, and wherein the gearbox is a planetary gearbox assembly wherein:
the input is an input sun gear,
the output is an output ring gear driven by an intermediate planetary gear, the intermediate planetary gear is driven by the sun gear, and,
a position transducer having a rotary input, in which the rotary input is driven by the planet carrier via an ungeared connection.

14. A control surface assembly according to claim 13 in which the rotary input of the position transducer is concentric with an axis of procession of the planet gear.

15. A control surface assembly according to claim 14 in which the position transducer is positioned at least partially within a volume defined by the procession of the planetary gear, preferably in which the rotary input of the position transducer engages with a drive formation of a drive arm oriented radially with respect to the procession of the planetary gear.

## Patentansprüche

1. Steuerflächenbaugruppe, die umfassend:
eine Flugzeugstrukturkomponente (10),
eine Steuerfläche (12), die beweglich an der Flugzeugstrukturkomponente (10) befestigt ist,
einen Stellantrieb (44), der einen ersten Elektromotor (48) umfasst, der so angeordnet ist, dass er die Steuerfläche (12) in Bezug auf die Flugzeugflügelkomponente (10) über einen ersten Lastpfad dazwischen antreibt, und
eine Dämpfungsbaugruppe (46), die so angeordnet ist, dass sie die relative Bewegung zwischen der Steuerfläche (12) und der Flugzeugflügelkomponente (10) über einen zweiten Lastpfad zwischen der Flugzeugflügelkomponente (10) zur Steuerfläche (12) dämpft, **dadurch gekennzeichnet, dass** der zweite Lastpfad von dem ersten Lastpfad getrennt ist.

2. Steuerflächenbaugruppe nach Anspruch 1, bei der der Stellantrieb (44) einen zweiten Elektromotor (50) umfasst, der so angeordnet ist, dass er die Steuerfläche (12) in Bezug auf die Flugzeugflügelkomponente (10) antreibt.

3. Steuerflächenbaugruppe nach Anspruch 2, bei der der Stellantrieb ein Getriebe (40) umfasst, das Folgendes aufweist:
einen Eingang, der so angeordnet ist, dass er durch mindestens einen von erstem bzw. zweitem Motor (48,50) angetrieben wird, und
einen Auslass, der so konfiguriert ist, dass er die Steuerfläche (12) antreibt.

4. Steuerflächenbaugruppe nach Anspruch 3, bei der der erste und der zweite Motor (48,50) so angeordnet ist, dass sie selektiv (i) abwechselnd und (ii) gleichzeitig den Getriebeeingang antreiben.

5. Steuerflächenbaugruppe nach einem der vorstehenden Ansprüche, bei der die Dämpfungsbaugruppe (46) zwischen einem ersten Modus und einem zweiten Modus geschaltet werden kann, wobei die Dämpfungswirkung der Baugruppe (46) im ersten Modus niedriger ist als im zweiten Modus.

6. Steuerflächenbaugruppe nach Anspruch 5, bei der im ersten Modus die Dämpfungswirkung vernachlässigbar ist.

7. Steuerflächenbaugruppe nach Anspruch 5 oder 6, bei der die Dämpfungsbaugruppe (46) automatisch zwischen dem ersten Modus und dem zweiten Modus, je nach einer Betriebsbedingung des Stellantriebs (44), schaltet.

8. Steuerflächenbaugruppe nach Anspruch 7, bei der der Dämpfer (54) ein elektromagnetischer Dämpfer ist.

9. Steuerflächenbaugruppe nach Anspruch 7, bei der der Dämpfer (54) ein hydraulischer Dämpfer ist.

10. Verfahren zum Prüfen einer Dämpfungsbaugruppe (46) auf einem Flugzeugflügel (10)
das folgende Schritte umfasst:
Bereitstellen einer Steuerflächenbaugruppe nach einem der vorstehenden Ansprüche;
Antreiben des Elektromotors (48);
Überprüfen der Funktion der Dämpfungsbaugruppe (46) unter Verwendung des durch den Motor (48) verbrauchten elektrischen Stroms.

11. Verfahren zum Prüfen einer Dämpfungsbaugruppe (46) auf einem Flugzeugflügel (10) nach Anspruch 10, bei dem die Steuerflächenbaugruppe nach Anspruch 5 oder irgendeinem davon abhängigen Anspruch erfolgt, wobei das Verfahren folgende Schritte umfasst:
Antreiben des Elektromotors (48) mit dem Dämpfer (54) im ersten Modus, um einen ersten Stromverbrauch zu erzielen,
Umschalten des Dämpfers (54) in den zweiten Modus,
Antreiben des Elektromotors (48) mit dem Dämpfer (54) im zweiten Modus, um einen zweiten Stromverbrauch zu erzielen, und
Überprüfen der Funktion des Dämpfers (54) durch Vergleichen des ersten und zweiten Stromverbrauchs.

12. Verfahren zum Prüfen einer Dämpfungsbaugruppe (46) auf einem Flugzeugflügel (10) nach Anspruch 11, in dem beide Stufen der Stromversorgung die Stufe der Stromversorgung des Elektromotors (48) umfasst, um die gleiche Abtriebsdrehzahl zu erreichen.

13. Steuerflächenbaugruppe nach Anspruch 3, wobei der Stellantrieb ein Flugzeugsteuerflächenstellantriebist und wobei das Getriebe eine Planetengetriebebaugruppe ist, wobei:
der Eingang ein Eingangssonnenrad ist,
der Ausgang ein Ausgangshohlrad ist, das durch ein Planetenzwischengetriebe angetrieben wird, wobei das Planetenzwischengetriebe durch das Sonnenrad angetrieben wird, und
ein Positionsgeber mit einem Drehwinkelgeber, in dem der Drehwinkelgeber durch den Planetenträger über eine getriebelose Verbindung angetrieben wird.

14. Steuerflächenbaugruppe nach Anspruch 13, in der der Drehwinkelgeber des Positionsgebers konzentrisch mit einer Prozessionsachse des Planetengetriebes ist.

15. Steuerflächenbaugruppe nach Anspruch 14, in der der Positionsgeber zumindest teilweise innerhalb eines Volumens positioniert ist, das durch die Prozession des Planetengetriebes definiert wird, bei dem vorzugsweise der Drehwinkelgeber des Positionsgebers mit einer Antriebsformation eines Antriebsarms ineinandergreift, die in Bezug auf die Prozession des Planetengetriebes radial ausgerichtet ist.

## Revendications

1. Ensemble gouverne comprenant :
un élément de structure d'avion (10) ;
une gouverne (12) montée de façon mobile sur l'élément de structure d'avion (10),
un actionneur (44) comprenant un premier moteur électrique (48) agencé pour entraîner la gouverne (12) par rapport à l'élément d'aile d'avion (10) par l'intermédiaire d'une première ligne de charge entre celles-ci, et,
un ensemble amortisseur (46) agencé pour amortir un mouvement relatif entre la gouverne (12) et l'élément d'aile d'avion (10) par l'intermédiaire d'une deuxième ligne de charge entre l'élément d'aile d'avion (10) et la gouverne (12), **caractérisé en ce que** la deuxième ligne de charge est séparée de la première ligne de charge.

2. Ensemble gouverne selon la revendication 1, dans lequel l'actionneur (44) comprend un deuxième moteur électrique (50) agencé pour entraîner la gouverne (12) par rapport à l'élément d'aile d'avion (10).

3. Ensemble gouverne selon la revendication 2, dans lequel l'actionneur comprend une boîte d'engrenages (40) comportant :
une entrée agencée pour être entraînée par au moins l'un des premier et deuxième moteurs (48, 50), et,
une sortie configurée pour entraîner la gouverne (12).

4. Ensemble gouverne selon la revendication 3, dans lequel les premier et deuxième moteurs (48, 50) sont tous deux agencés pour entraîner sélectivement l'entrée de la boîte d'engrenages (i) alternativement et (ii) simultanément.

5. Ensemble gouverne selon l'une quelconque des revendications précédentes, dans lequel l'ensemble amortisseur (46) est commutable entre un premier mode et un deuxième mode, dans lequel l'effet d'amortissement de l'ensemble (46) est plus faible dans le premier mode que dans le deuxième mode.

6. Ensemble gouverne selon la revendication 5, dans lequel l'effet d'amortissement est négligeable dans le premier mode.

7. Ensemble gouverne selon la revendication 5 ou 6, dans lequel l'ensemble amortisseur (46) est automatiquement commuté entre le premier mode et le deuxième mode en fonction d'une condition de fonctionnement de l'actionneur (44).

8. Ensemble gouverne selon la revendication 7, dans lequel l'amortisseur (54) est un amortisseur électromagnétique.

9. Ensemble gouverne selon la revendication 7, dans lequel l'amortisseur (54) est un amortisseur hydraulique.

10. Procédé de test d'un ensemble amortisseur (46) sur une aile d'avion (10) comprenant les étapes consistant à :
fournir un ensemble gouverne selon l'une quelconque des revendications précédentes ;
alimenter le moteur électrique (48) ;
vérifier la fonction de l'ensemble amortisseur (46) en utilisant la puissance électrique consommée par le moteur (48).

11. Procédé de test d'un ensemble amortisseur (46) sur une aile d'avion (10) selon la revendication 10, dans lequel l'ensemble gouverne est selon la revendication 5 ou toute revendication dépendant de celle-ci, comprenant les étapes consistant à :
alimenter le moteur électrique (48), avec l'amortisseur (54) dans le premier mode, pour obtenir une première puissance électrique consommée,
commuter l'amortisseur (54) dans le deuxième mode,
alimenter le moteur électrique (48), avec l'amortisseur (54) dans le deuxième mode, pour obtenir une deuxième puissance électrique consommée, et,
vérifier la fonction de l'amortisseur (54) en comparant les première et deuxième puissances électriques consommées.

12. Procédé de test d'un ensemble amortisseur (46) sur une aile d'avion (10) selon la revendication 11, dans lequel les deux étapes d'alimentation comprennent l'étape consistant à alimenter le moteur électrique (48) pour obtenir la même vitesse de sortie.

13. Ensemble gouverne selon la revendication 3, dans lequel l'actionneur est un actionneur de gouverne d'avion, et dans lequel la boîte d'engrenages est un ensemble boîte d'engrenages planétaires, dans lequel :
l'entrée est un engrenage solaire d'entrée,
la sortie est un engrenage circulaire de sortie entraîné par un engrenage planétaire intermédiaire, l'engrenage planétaire intermédiaire est entraîné par l'engrenage solaire, et,
un transducteur de position comportant une entrée rotative, dans lequel l'entrée rotative est entraînée par le porte-satellites par l'intermédiaire d'une liaison sans engrenages.

14. Ensemble gouverne selon la revendication 13, dans lequel l'entrée rotative du transducteur de position est concentrique avec un axe de précession de l'engrenage planétaire.

15. Ensemble gouverne selon la revendication 14, dans lequel le transducteur de position est positionné au moins partiellement à l'intérieur d'un volume défini par la précession de l'engrenage planétaire, de préférence dans lequel l'entrée rotative du transducteur de position vient en prise avec une formation d'entraînement d'un bras d'entraînement orienté dans le sens radial par rapport à la précession de l'engrenage planétaire.
